# EUROPEAN PATENT SPECIFICATION

(11) **EP 0 489 505 B1**
(45) Date of publication and mention of the grant of the patent: **27.07.1994**
(21) Application number: 91310274.5
(22) Date of filing: 06.11.1991
(51) Int. Cl.: F16B 21/07

(54) **Metal weld stud and plastic clip**
Metallischer Schweissbolzen und Kunststoffklammer
Goujon métallique à souder et clip en plastic

(30) Priority: 28.11.1990 DE 9016190 U
(43) Date of publication of application: 10.06.1992
(73) Proprietor: EMHART INC., Newark, Delaware 19711 (US)
(72) Inventor: Baum, Heinz Otto, W-6300 Giessen-Allendorf (DE); Reindl, Johann, W-6301 Biebertal 4 (DE)
(74) Representative: Stagg, Diana Christine

(56) References cited:
- EP-A- 0 437 959
- DE-A- 2 261 824
- DE-A- 2 744 294
- DE-U- 8 634 603
- DE-U- 9 016 190

## Description

The present invention relates to the combination of a metal weld stud having a projecting head for welding to a receptor surface together with a resilient clip for mounting on said head and retained by said projecting head (DE-A-2 744 294). The resilient clip is commonly formed of plastics material and is provided with a slightly undersized undercut opening which is forced over the projecting head and thus engages the projecting head to retain the clip on the stud.

It is an object of the present invention to provide such a stud-and-clip combination which permits the clip to be easily mounted on the stud by direct pressure and which provides a more positive location of the clip on the stud when it is welded to a receptor surface.

According to the present invention, a metal stud having a projecting head for welding to a receptor surface and a resilient clip for mounting on said stud and retained by said projecting head is characterised in that the underside of said head has a tapered stepwise shoulder which reduces step-by-step to the diameter of said stud, in that said clip has a retaining hole of which the internal diameter increases correspondingly from a diameter equal to that of the stud whereby it engages the tapered shoulder under said head when the clip is applied to the stud and in that said clip is provided with at least two retaining members which contact said receptor surface to urge the clip into close engagement with the tapered shoulder under the head of the stud.

The clip is applied to the stud in an axial direction so that the longitudinal axes of the stud and of the clip are aligned.

In a preferred embodiment of the invention, said tapered shoulder reduces to the diameter of the stud in at least three steps and the retaining hole of the clip increases in corresponding steps from a internal diameter equal to the diameter of the stud whereby it engages the stepped shoulder under said head when the clip is applied.

The flexibility of the plastic clip and the height of the steps and their configuration provide a wide degree of tolerance of accommodating variations between the stud and the receptor surface.

In previously known stud-clips, the underside of the projecting head extends normally from the stud.

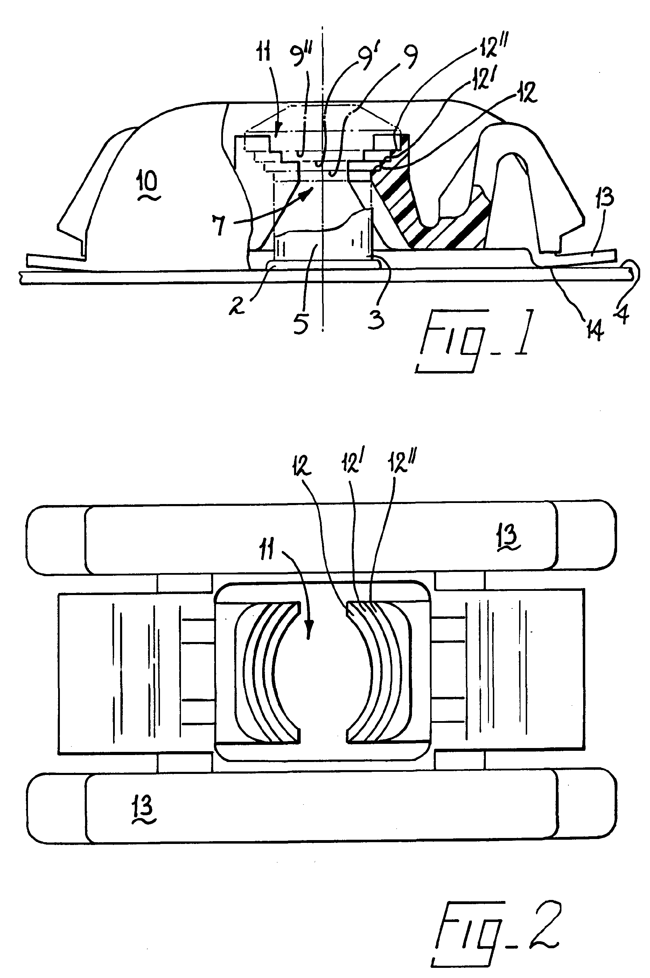

In order that the invention can be better understood a preferred embodiment will now be described by way of example with reference to the accompanying drawings in which:-
Figure 1 is a part section a clip and stud according to the invention showing the stud mounted on the clip, and
Figure 2 is a plan view of the clip shown in Figure 1.

In the drawings, weld stud 3 is welded through zone 2 to receptor surface 4. Stud 3 has a cylindrical stem 5 and a projecting head 6 at its outward (with respect to the weld) end. The underside of projecting head 6 has a tapered shoulder 7 reducing progressively to the diameter of stem 8 of stud 3 by a series of three steps 9, 9′, 9˝. Clip 10 has a mounting aperture 11, the inner surface of the aperture being formed as a series of steps 12, 12′, 12˝ which correspond to the steps 9, 9′, 9˝ of shoulder 7. Two resilient arms 13 extending from clip 10 contact receptor surface 4 at 14 and serve to urge the stepped surface of mounting aperture 11 into close contact with the stepped shoulder 7 of weld stud 3. This firmly locates clip 10 in position on stud 3 and obviates the possibility of sliding between the stud and clip.

The resilience of the plastics material from which clip 10 is formed enables the narrowest part of aperture 11 to be forced over the widest part of lead 6 and when the clip 10 is in position over head 6, the resilience of arms 13 pressing against receptor surface 4 urges the steps 12, 12′, 12˝ of the clip into firm contact with the steps 9, 9′, 9˝ of tapered shoulder 7.

## Claims

1. A metal stud (3) having a projecting head for welding to a receptor surface and a resilient clip (10) for mounting on said stud (3) and retained by said projecting head (6) characterised in that the underside of said head has a stepwise, tapered shoulder (7) which reduces step-by-step to the diameter of said stud, in that said clip has a retaining hole (11) of which the intenal diameter increases correspondingly from a diameter equal to that of the stud whereby it engages the tapered shoulder under said head when the clip is applied to the stud and in that said clip is provided with at least two retaining members (13) which contact said receptor surface to urge the clip into close engagement with the tapered shoulder under the head of the stud.

2. A metal stud and a resilient clip according to claim 1, wherein said tapered shoulder (7) reduces to the diameter of the stud (3) in at least three steps and the retaining hole (11) of the clip (10) increases in corresponding steps from a intenal diameter equal to the diameter of the stud (3) whereby it engages the stepped shoulder under said head when the clip (3) is applied.

## Patentansprüche

1. Metallbolzen (3) mit einem vorstehenden Kopf zum Schweißen auf einer Aufnahmeoberfläche und elastischer Klemmhalter (10) zum Montieren auf dem Bolzen (3) und gehalten durch den vorstehenden Kopf (6),
**dadurch gekennzeichnet,** daß die Unterseite des Kopfes eine stufenweise kegelförmige Schulter (7) aufweist, die sich Stufe um Stufe auf den Durchmesser des Bolzens reduziert, dadurch daß der Klemmhalter eine Haltebohrung (11) aufweist, von der sich der Innendurchmesser entsprechend von dem Durchmesser erhöht, der gleich dem des Bolzens ist, wodurch der Klemmhalter die kegelförmige Schulter unter dem Kopf ergreift, wenn er an dem Bolzen angelegt wird, und dadurch, daß der Klemmhalter mit mindestens zwei Halteteilen (13) versehen ist, die die Aufnahmeoberfläche kontaktieren, um den Klemmhalter in engem Eingriff mit der kegelförmigen Schulter unter dem Kopf des Bolzens zu zwingen.

2. Metallbolzen und elastischer Klemmhalter nach Anspruch 1, wobei die kegelförmige Schulter (7) sich auf den Durchmesser des Bolzens (3) in mindestens drei Stufen reduziert und die Haltebohrung (11) des Klemmhalters (10) sich in entsprechenden Stufen von einem inneren Durchmesser erhöht, der gleich dem Durchmesser des Bolzens (3) ist, wodurch er die abgestufte Schulter unter dem Kopf ergreift, wenn der Klemmhalter (10) angelegt wird.

## Revendications

1. Ensemble constitué d'un goujon métallique (3), comportant une tête formant saillie et destiné à être soudé sur une surface réceptrice, et d'une agrafe élastique (10) destinée à être montée sur le goujon (3) et à être retenue par la tête formant saillie (6), caractérisé en ce que la face inférieure de la tête comporte un épaulement étagé convergent (7) qui présente une réduction progressive jusqu'au diamètre du goujon, en ce que l'agrafe comporte un trou de retenue (11) dont le diamètre intérieur augmente d'une manière correspondante à partir d'un diamètre égal à celui du goujon, de façon à coopérer avec l'épaulement convergent situé sous la tête lorsque l'agrafe est appliquée sur le goujon, et en ce que l'agrafe est pourvue d'au moins deux éléments de retenue (13) qui viennent au contact de la surface réceptrice de façon à exercer sur l'agrafe une sollicitation faisant coopérer cette agrafe étroitement avec l'épaulement convergent situé sous la tête du goujon.

2. Ensemble constitué d'un goujon métallique et d'une agrafe élastique suivant la revendication 1, dans lequel l'épaulement convergent (7) présente une réduction jusqu'au diamètre du goujon (3) en au moins trois gradins et le trou de retenue (11) de l'agrafe (10) présente une augmentation, à partir d'un diamètre intérieur égal au diamètre du goujon (3), de façon à coopérer avec l'épaulement étagé situé sous la tête lorsque l'agrafe (3) est appliquée.
